# FASCICULE DE BREVET EUROPEEN

(11) **EP 3 157 733 B1**
(45) Date de publication et mention de la délivrance du brevet: **07.08.2019**
(21) Numéro de dépôt: 15736555.2
(22) Date de dépôt: 16.06.2015
(51) Int. Cl.: B29C 65/18, B65B 7/28, B65B 51/10, B65B 51/14, B65D 1/26, B65D 77/20, A47G 19/22

(54) **PROCÉDÉ ET DISPOSITIF DE THERMOSCELLAGE D'UN OPERCULE SUR LE BUVANT D'UN VERRE**
VERFAHREN UND VORRICHTUNG ZUM HEISSSIEGELN EINES DECKELS AUF DEN RAND EINES GLASES
METHOD AND DEVICE FOR HEAT-SEALING A LID ONTO THE RIM OF A GLASS

(30) Priorité: 17.06.2014 FR 1401368
(43) Date de publication de la demande: 26.04.2017
(73) Titulaire: 1/4 Vin, 83210 Sollies-Pont (FR)
(72) Inventeur: CARVIN, Pascal, F-83210 Sollies Pont (FR); MURA, Christian, F-83330 Le Plan Du Castellet (FR)
(74) Mandataire: Marchand, André
(86) Numéro de dépôt international: PCT/FR2015/051598
(87) Numéro de publication internationale: WO 2015/193611

(56) Documents cités:
- DE-A1- 3 105 911
- GB-A- 2 077 183

## Description

La présente invention est relative à un procédé et à un dispositif de thermoscellage d'un opercule sur le buvant d'un verre.

L'invention est notamment relative au thermoscellage d'un opercule sur le buvant d'un verre en matière plastique rempli de vin conditionné sous atmosphère modifiée.

### ETAT DE LA TECHNIQUE

Le brevet GB2077183 décrit un dispositif selon le préambule de la revendication 1.

Le conditionnement du vin dans un verre à boire fermé a été décrit dans le brevet FR2735003. Le conteneur décrit dans ce brevet comporte un élément de fermeture épousant la paroi du conteneur afin d'assurer l'étanchéité du conditionnement, et dont une face inférieure plane est située à proximité de la surface libre du vin afin de délimiter un espace résiduel - également désigné par « espace de tête » - réduit. Le verre est réalisé en verre ou en plastique.

Il a été proposé dans le brevet EP1235501 de conditionner le vin dans un récipient fermé dont la perméabilité globale à l'oxygène est suffisamment faible pour permettre la conservation durable du vin. Le récipient est en verre et est fermé par un opercule thermoscellable comportant une couche d'aluminium revêtue d'une couche de protection. Le vin est conditionné sous une atmosphère appauvrie en oxygène; ainsi, l'espace de tête délimité par l'opercule, la paroi du verre, et la surface libre du vin, contient peu d'oxygène, ce qui limite l'oxydation du vin.

Ce brevet décrit un dispositif de conditionnement comportant un poste de thermoscellage d'un opercule sur le buvant d'un verre déplacé par un convoyeur, qui comporte un vérin déplaçant verticalement un outil comportant un élément chauffant résistif et une pièce métallique massive revêtue sur sa face inférieure d'un tampon déformable réalisé dans un matériau conducteur de la chaleur, tel que du silicone.

La demande internationale WO2006136694 décrit un dispositif de conditionnement d'une boisson dans des verres déplacés par un convoyeur, dans lequel les verres sont placés dans des godets portés par le convoyeur. Le dispositif comporte un poste de thermoscellage équipé de moyens d'inertage d'un verre déjà rempli de vin, qui comportent un conduit poreux alimenté en gaz inerte sous pression afin de délivrer un flux lent de gaz inerte remplissant l'espace de tête.

La demande internationale WO2010106239 décrit un verre en matière plastique dans lequel l'extrémité supérieure du bord- ou buvant - du verre comporte une nervure annulaire en matière thermoplastique présentant, en section, une forme de « T » renversé, de sorte que deux surfaces - ou volumes - de collecte s'étendant de part et d'autre de la nervure et en retrait du sommet de la nervure reçoivent de la matière résultant de l'écrasement de la nervure lors du thermoscellage d'un opercule sur le buvant. Ceci permet d'augmenter la surface de contact entre le buvant et une pellicule de matière servant à sceller un opercule au buvant, sans augmenter la largeur - ou épaisseur -du buvant, d'augmenter la résistance à l'arrachement de l'opercule, de diminuer la perméabilité à l'oxygène de la zone de liaison - en particulier de la pellicule de scellage - reliant le buvant et l'opercule, et de limiter ou d'éviter la présence de reliquats saillants après l'arrachement de l'opercule.

Un défaut de parallélisme entre l'outil de thermoscellage et le buvant du verre peut conduire à un défaut d'étanchéité du verre fermé par l'opercule thermoscellé.

Un tel défaut est particulièrement critique lorsque le buvant comporte une partie fusible qui se déforme lors du thermoscellage, pouvant conduire à une déformation hétérogène le long du buvant, ainsi qu'à la formation de saillies indésirables pour le confort de l'utilisateur du verre rempli de boisson.

Un tel défaut de parallélisme peut notamment résulter d'un défaut de parallélisme entre le buvant et le pied du verre.

Lorsque le verre est disposé sur un convoyeur par l'intermédiaire d'un support de verre tel qu'un godet, ce défaut de parallélisme peut en outre résulter d'un défaut de parallélisme entre l'outil de thermoscellage et le convoyeur, et/ou d'un défaut de parallélisme entre la face d'appui du support de verre sur le convoyeur et la face d'appui du verre sur le support de verre.

### EXPOSÉ DE L'INVENTION

Un objectif de l'invention est de proposer un procédé et un dispositif de thermoscellage d'un opercule sur le buvant d'un verre, qui permettent de compenser des défauts de parallélisme entre le buvant du verre et l'outil de thermoscellage.

Un objectif de l'invention est de proposer un procédé et un dispositif de thermoscellage d'un opercule sur le buvant d'un verre, qui soient améliorés et/ou qui remédient, en partie au moins, aux lacunes ou inconvénients des procédés et dispositifs de thermoscellage connus.

Un objectif de l'invention est de proposer un procédé et un dispositif de thermoscellage d'un opercule sur le buvant d'un verre, qui soient utilisables pour obturer des verres dont les buvants respectifs présentent des formes diverses.

Un objectif de l'invention est de proposer un procédé et un dispositif de thermoscellage d'un opercule sur le buvant d'un verre en matière thermoplastique présentant, en section, une nervure en partie au moins fusible lors du thermoscellage, en particulier une nervure en forme de « T » renversé, qui soient améliorés.

Selon un aspect de l'invention, il est proposé un dispositif de thermoscellage comportant un élément déformable (compressible) et thermiquement conducteur prévu pour appuyer sur un opercule placé sur le buvant d'un verre et pour chauffer l'opercule et le buvant, dont une partie périphérique est agencée pour s'étendre au-delà - à l'extérieur - du buvant, afin notamment de rabattre une partie périphérique de l'opercule vers la face externe du buvant (ou d'une paroi latérale du verre s'étendant sous le buvant), cet élément conducteur (déformable) étant en outre monté articulé et suspendu (pendu), afin notamment de compenser, en partie au moins, un défaut de parallélisme entre le buvant et l'élément conducteur.

En d'autres termes, le dispositif de thermoscellage comporte notamment des moyens de suspension et d'articulation de l'élément conducteur par rapport à un actionneur servant à déplacer cet élément, en particulier un actionneur linéaire tel qu'un vérin.

La capacité de déformation de l'élément conducteur peut permettre de compenser un défaut de planéité ou de rugosité du buvant, et d'éviter ainsi un défaut d'étanchéité.

Lorsque le buvant du verre est déformé (par fluage de la matière plastique constitutive du buvant et du verre), c.à.d. en partie fondu, au cours du thermoscellage, l'appui exercé sur l'opercule et le buvant par l'élément conducteur déformable qui « déborde » du buvant, conduit à arrondir ou incurver la partie externe du buvant, et à éviter la formation de saillies sur le bord externe du buvant.

Notamment lorsque le buvant du verre comporte, à la fin du thermoscellage, une section de contour courbe, en particulier une section de contour arrondi ou une section de contour courbe résultant de la déformation (fusion) d'une nervure du buvant, l'élément conducteur déformable peut présenter une épaisseur, un diamètre, et une élasticité (compressibilité) suffisants pour se déformer en épousant la portion périphérique latérale (externe) du buvant, ce qui peut permettre le thermoscellage de la partie périphérique de l'opercule sur cette portion périphérique du buvant, le long de son profil courbe.

L'élément conducteur déformable peut présenter une forme de disque ou de couronne ; il peut notamment être fabriqué en silicone ; il présente une plus grande dimension - en particulier un diamètre extérieur - supérieur(e) au diamètre du buvant.

La suspension de l'élément conducteur (déformable) peut être obtenue notamment par une ou plusieurs coulisse(s) - ou organe(s) de guidage équivalent(s) - qui permettent un mouvement (relatif) de translation entre l'élément conducteur et un actionneur linéaire de l'outil de thermoscellage, en particulier un mouvement de translation selon l'axe de déplacement de cet actionneur.

Les moyens de suspension de l'élément conducteur peuvent également comporter un ou plusieurs ressort(s) de faible raideur coopérant respectivement avec la (les) coulisse(s), ce qui permet notamment à l'élément conducteur d'exercer un effort d'appui négligeable sur l'opercule et sur le buvant, à la fin de la course imprimée par l'actionneur à l'élément conducteur déformable, c'est-à-dire un effort d'appui très inférieur à celui nécessaire au thermoscellage de l'opercule sur le buvant.

En particulier, chaque ressort peut être en appui sur une coulisse pour former une sorte de poussoir.

Ainsi, entre la mise en contact de la tête sur le buvant et la fin du déplacement de l'élément conducteur par l'actionneur, l'effort d'appui exercé par l'élément conducteur sur l'opercule et sur le buvant est très faible, ce qui facilite la mise en parallèle de cet élément conducteur et du buvant qui est permise par l'articulation de l'élément conducteur, et ce qui permet ensuite d'appliquer un effort d'appui homogène sur tout le pourtour du buvant, et par conséquent d'améliorer la qualité du scellage de l'opercule.

L'articulation de l'élément conducteur déformable permet de préférence une rotation de cet élément selon deux axes de rotation sensiblement orthogonaux (perpendiculaires entre eux) qui peuvent être sensiblement perpendiculaires à l'axe de l'effort d'appui exercé par l'actionneur sur l'élément conducteur, et/ou à l'axe de l'effort d'appui exercé par l'élément conducteur sur l'opercule et sur le buvant.

L'élément conducteur déformable est généralement intégré à un outil de thermoscellage comportant une pièce métallique solidaire de l'élément conducteur et d'un élément chauffant, en particulier d'un élément chauffant résistif, l'outil de thermoscellage étant fixé à une tige d'un actionneur linéaire (tel qu'un vérin) prévu pour exercer un effort d'appui qui est transmis par la pièce métallique à l'élément conducteur afin que ce dernier appuie sur l'opercule et par conséquent sur le buvant.

Pour permettre l'articulation de l'élément conducteur d'appui et de chauffage de l'opercule, l'outil de thermoscellage peut comporter une première partie d'outil rigidement fixée à la tige du vérin, et une seconde partie d'outil montée articulée sur - par rapport à - la première partie d'outil, cette seconde partie d'outil comportant la pièce métallique, l'élément chauffant, et l'élément conducteur déformable.

La seconde partie d'outil est de préférence suspendue (pendue) à la première partie d'outil, par l'intermédiaire de ladite (desdites) coulisse(s).Pour obtenir d'une part une capacité significative d'articulation mutuelle des première et seconde parties d'outil, d'autre part une suspension de la seconde partie d'outil par rapport à la première partie d'outil, la seconde partie d'outil peut comporter un corps percé de canaux parallèles, chaque canal comportant une butée et recevant un desdits ressorts, en particulier un ressort hélicoïdal s'étendant selon l'axe longitudinal du canal, et la première partie d'outil peut comporter des coulisses parallèles, en particulier des coulisses en forme de tiges, qui sont respectivement partiellement engagées dans les canaux, qui sont respectivement en appui sur un desdits ressorts, chaque coulisse étant agencée pour coulisser dans un des canaux avec un jeu permettant également son inclinaison par rapport à l'axe longitudinal du canal, les coulisses coopérant respectivement avec les butées qui empêchent la sortie des coulisses hors des canaux.

Alternativement, le corps percé de canaux peut être fixé ou intégré à la première partie d'outil tandis que les coulisses peuvent être fixées ou intégrées à la seconde partie d'outil.

Selon un mode de réalisation, le nombre de canaux et le nombre de coulisses peuvent être égaux à trois.

La raideur desdits ressorts peut être choisie de façon à compenser la masse de la seconde partie d'outil, c.à.d. la masse de la partie suspendue de l'outil de thermoscellage, de sorte que ces ressorts peuvent supporter cette partie d'outil lorsque l'outil de thermoscellage est renversé, par pivotement de l'outil autour d'un axe horizontal, afin de permettre la prise d'un opercule par un préhenseur pneumatique tel qu'une ventouse, qui est intégré à la partie inférieure de la tête de scellage, comme décrit par exemple dans la demande WO2006136694 susmentionnée.

Les ressorts servent à maintenir la partie inférieure de la tête de scellage dans le prolongement de la partie supérieure de la tête, lors de ces mouvements de pivotement de la tête, afin que la partie inférieure soit correctement positionnée, après pivotement, et que le dépôt - et la mise en contact - de l'opercule sur le buvant par le préhenseur pneumatique soit correct.

Ces moyens d'articulation et de suspension de l'élément thermiquement conducteur, en particulier les moyens d'articulation et de suspension mutuelle des première et seconde parties d'outil, permettent notamment à l'élément conducteur de pivoter sans effort autour de son premier point d'appui - de contact - sur le buvant lors de son mouvement de mise en appui sur l'opercule - et le buvant -, lorsque le buvant n'est pas parallèle à la face inférieure de l'outil de scellage.

Ce mouvement de pivotement permet alors de limiter - ou éviter - le glissement de l'opercule sur le buvant et/ou le glissement de l'élément conducteur sur l'opercule, ce qui permet d'améliorer le scellage.

Le dispositif de thermoscellage comporte en outre des moyens de transmission d'un effort d'appui exercé par un actionneur, à l'élément conducteur, qui sont distincts (séparés) des moyens d'articulation et de suspension de l'élément conducteur.

Ces moyens de transmission d'effort comportent de préférence une pièce de transmission d'effort qui peut être rigidement liée à l'une des première et seconde parties d'outil, en particulier à la seconde partie d'outil et à l'élément conducteur, cette pièce comportant une surface d'appui - ou portée - s'étendant entre les première et seconde parties d'outil, de préférence une portée bombée.

Divers autres moyens équivalents peuvent être prévus pour assurer l'articulation et la suspension de l'élément conducteur par rapport à la tige de l'actionneur servant à déplacer l'outil de thermoscellage.

Par ailleurs, le dispositif de thermoscellage comporte de préférence un dispositif d'introduction d'un gaz inerte dans l'espace de tête à l'aide d'une structure poreuse, en particulier le dispositif d'injection de gaz inerte à faible vitesse tel que décrit dans la demande internationale WO2006136694.

Selon un autre aspect de l'invention, il est proposé un procédé de thermoscellage d'un opercule sur le buvant d'un verre dans lequel on utilise un dispositif de thermoscellage selon l'invention.

L'invention s'applique notamment au thermoscellage d'un opercule gaufré et/ou embouti sur le buvant d'un verre, en particulier d'un verre en polyéthylène-téréphtalate (PET) qui peut notamment être fabriqué par un procédé d'injection soufflage, et qui peut présenter un buvant dont le profil transversal présente une nervure en forme de « T » renversé, et le cas échéant les autres caractéristiques décrites dans la demande internationale WO2010106239.

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 est une vue de coté schématique d'un outil de thermoscellage selon un mode de réalisation, et est une vue du détail A de la figure 4.
La figure 2 est une vue de coté schématique de l'outil de thermoscellage illustré figure 1, qui est en appui sur le buvant d'un verre qui est initialement parallèle à l'élément conducteur de l'outil de thermoscellage.
La figure 3 est une vue de coté schématique de l'outil de thermoscellage illustré figure 1, qui est en appui sur le buvant d'un verre qui n'est initialement pas parallèle à l'élément conducteur de l'outil de thermoscellage, c.à.d. qui n'est pas perpendiculaire à l'axe de déplacement de l'outil de thermoscellage. La figure 3 est une vue du détail B de la figure 5.
La figure 4 est une vue de coté schématique d'un dispositif de thermoscellage comportant l'outil de thermoscellage illustré figure 1, avant le thermoscellage, l'outil étant disposé à distance du buvant d'un verre qui n'est pas parallèle à l'élément conducteur déformable.
La figure 5 est une vue de coté schématique du dispositif de thermoscellage illustré figure 4, pendant le thermoscellage, l'élément conducteur de l'outil de thermoscellage étant en appui sur le buvant d'un verre qui n'est pas perpendiculaire à l'axe de déplacement de l'outil de thermoscellage.
La figure 6 est une vue en coupe schématique illustrant la déformation de la périphérie d'un élément conducteur maintenu en appui contre un opercule reposant sur le buvant d'un verre, au cours du thermoscellage de l'opercule.

### DESCRIPTION DETAILLEE DE L'INVENTION

Sauf indication explicite ou implicite contraire, des éléments ou organes - structurellement ou fonctionnellement - identiques ou similaires sont désignés par des repères identiques sur les différentes figures.

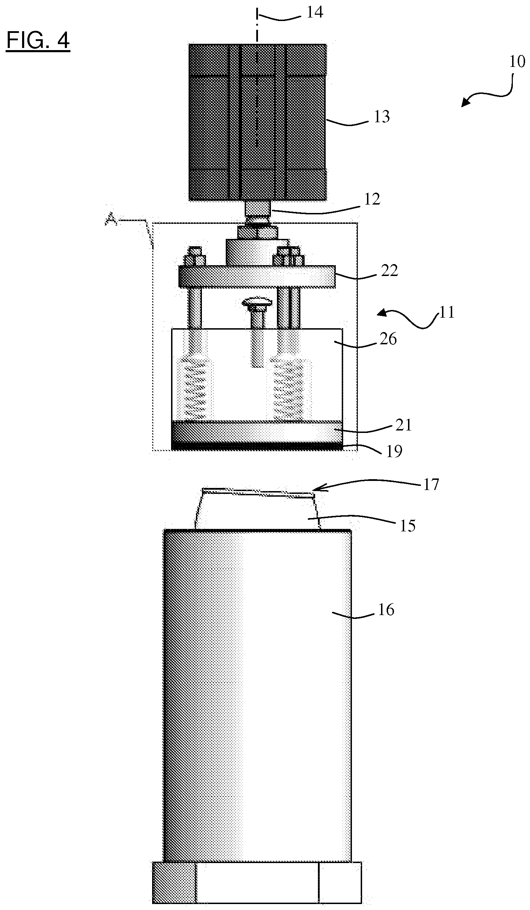

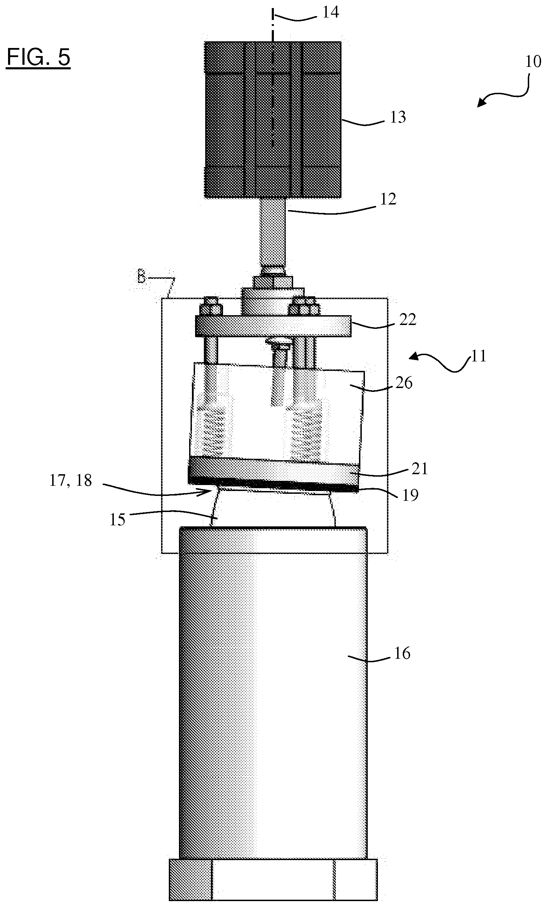

Par référence aux figures 4 et 5 notamment, le dispositif 10 de thermoscellage comporte un outil 11 de thermoscellage qui est monté à l'extrémité inférieure de la tige 12 d'un vérin 13 servant à déplacer l'outil 11 en translation selon l'axe 14 longitudinal du vérin 13 et de la tige 12, qui est sensiblement vertical.

Un verre 15 rempli (partiellement) d'une boisson est disposé sur un support 16 de verre qui est disposé sur - et déplaçable par - un convoyeur non représenté.

Le support 16 présente une cavité cylindrique dont l'axe vertical peut être sensiblement aligné avec l'axe 14, par déplacement du support 16 par le convoyeur.

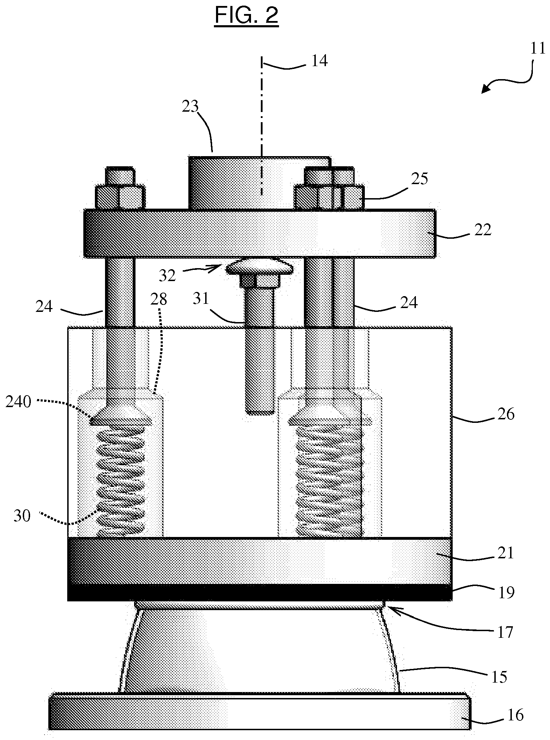

Le verre 15 est engagé par sa partie inférieure dans cette cavité du support 16, de sorte que seule la partie supérieure du verre, incluant le buvant 17, est visible sur les figures 2 à 5.

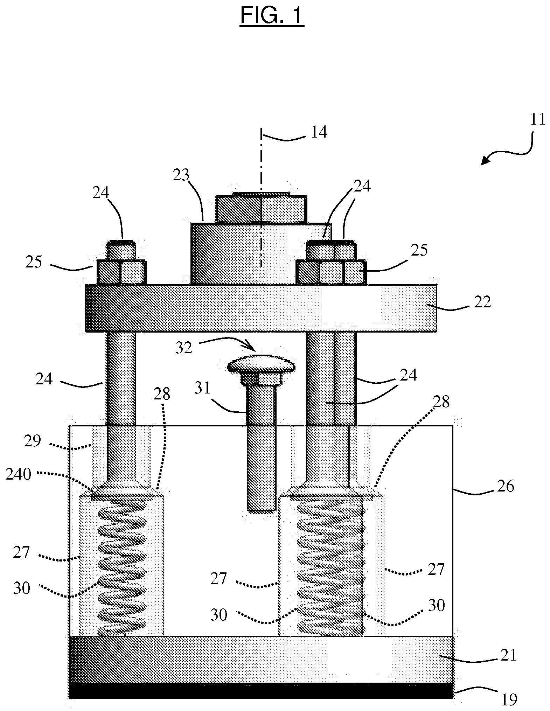

Par référence aux figures 1 à 3 et 6 notamment, l'outil de thermoscellage 11 comporte un élément 19 thermiquement conducteur, un élément chauffant 20, et une pièce métallique 21 solidaire de - et en contact thermique avec - l'élément conducteur 19 et l'élément chauffant 20.

La pièce 21 peut présenter une forme de disque contre la face inférieure duquel l'élément conducteur 19 peut être solidarisé par vulcanisation.

Pour le scellage d'un opercule, l'élément chauffant 20 est alimenté par une source d'énergie électrique non représentée.

La chaleur dégagée par l'élément chauffant est transmise à la pièce 21 qui s'échauffe, provocant à son tour l'échauffement de l'élément conducteur 19.

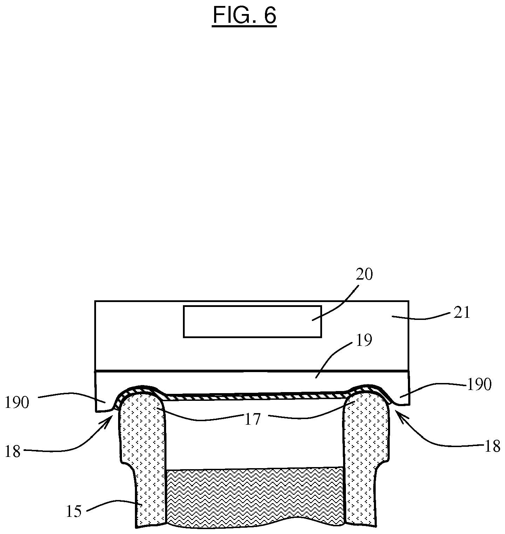

Comme illustré figure 6, l'élément 19 thermiquement conducteur est prévu pour appuyer sur l'opercule 18 et sur le buvant 17 et pour chauffer l'opercule et le buvant, pendant le thermoscellage, une partie périphérique 190 de l'élément conducteur 19 s'étendant à l'extérieur du buvant.

A cet effet, l'élément conducteur 19 peut présenter une forme de disque ou de couronne dont le diamètre extérieur est supérieur(e) au diamètre du buvant.

Notamment lorsque le verre est en matière plastique et comporte un buvant présentant une nervure, l'appui de l'élément conducteur chauffé sur l'opercule et sur le buvant provoque une déformation plastique de la nervure lors du scellage, et l'appui exercé sur l'opercule et sur le buvant par la partie périphérique 190 de l'élément conducteur qui s'étend au delà du buvant en épousant la face externe du buvant, peut provoquer une courbure de la partie externe du buvant, et/ou le thermoscellage de la partie périphérique de l'opercule sur une portion périphérique du buvant, le long d'une partie au moins de son profil courbe.

Par référence aux figures 1 à 3 notamment, l'outil 11 comporte une première partie d'outil - ou partie supérieure d'outil -, prévue pour être fixée à la tige de l'actionneur 13.

Cette partie supérieure d'outil comporte une pièce 22 en forme de disque - ou platine - qui s'étend le long d'un plan perpendiculaire à l'axe 14 de déplacement de l'outil 11, et qui est solidaire d'une douille 23 servant à fixer la platine 22 à la tige de l'actionneur.

La première partie d'outil comporte en outre trois tiges 24 parallèles à l'axe 14 qui s'étendent à partir de la platine 22, sous cette platine, qui sont vissées dans la platine 22 et bloquées par des écrous 25 prenant appui sur la face supérieure de la platine.

L'outil 11 comporte une seconde partie d'outil - ou partie inférieure d'outil - articulée sur - et suspendue à - la première partie d'outil.

Cette seconde partie d'outil comporte la pièce métallique 21, qui est en forme de disque d'axe 14 et reçoit l'élément chauffant 20 (cf. figure 6), et comporte en outre l'élément conducteur déformable 19.

La seconde partie d'outil comporte également un corps 26 percé de trois canaux 27 parallèles entre eux, qui s'étend dans le prolongement - et au dessus - de la pièce 21 dont le corps 26 est solidaire.

Chaque canal 27 s'étend dans le corps 26 à partir de la pièce 21, selon un axe longitudinal qui est parallèle à l'axe 14.

Chaque canal comporte une partie 29 rétrécie (de plus faible diamètre) qui est reliée - et coaxiale - à la partie la plus large du canal 27, par une surface tronconique de liaison formant une butée 28, et chaque canal débouche sur la face supérieure du corps 26.

Chaque canal 27 reçoit un ressort 30 hélicoïdal s'étendant selon l'axe longitudinal du canal, dans la partie inférieure - la plus large - du canal, chaque ressort 30 s'appuyant au fond du canal correspondant, sur la pièce 21.

Le positionnement relatif des canaux 27, 28, 29 est identique au positionnement relatif des tiges 24 qui sont respectivement partiellement engagées dans les canaux 27 à 29.

En particulier, les canaux peuvent être équidistants deux à deux, les traces des trois axes respectifs des trois canaux, dans un plan perpendiculaire à ces axes, formant alors les trois sommets d'un triangle équilatéral situé dans ce plan.

Chaque tige 24 comporte une tête 240 fraisée qui est logée dans la partie la plus large 27 du canal correspondant, et par l'intermédiaire de laquelle la tige est en appui sur l'extrémité supérieure du ressort 30 logé dans le canal 27.

La tête 240 de chaque tige 24 s'étend entre l'extrémité supérieure du ressort 30 logé dans le canal, et le rétrécissement formant butée 28, et présente un diamètre supérieur à celui de la partie 29 rétrécie du canal, de sorte que les butées 28 empêchent la sortie des tiges 24 hors des canaux 27 à 29.

Chaque tige est ainsi agencée et dimensionnée pour coulisser dans le canal 27 à 29 correspondant, avec un jeu radial important permettant notamment une libre inclinaison de la tige par rapport à l'axe longitudinal du canal, en cas de défaut de parallélisme entre le buvant et l'outil de thermoscellage.

Chaque tige 24 peut coulisser entre une première position illustrée figure 1 notamment, dans laquelle la tête 240 de la tige est en appui sur la butée 28, et une seconde position illustrée figure 2 notamment, dans laquelle la tête 240 de la tige est distante de la butée 28, et dans laquelle le ressort 30 sur lequel s'appuie la tête 240 est plus comprimé que dans la première position de la tige.

La partie inférieure d'outil comporte également une portée 32 de forme arrondie, qui est solidaire du corps 26 et s'étend entre le corps 26 et la pièce 22.

La portée 32 peut être réalisée par la face bombée - par exemple sphérique - de la tête d'une vis 31 qui est fixée en partie centrale du corps 26.

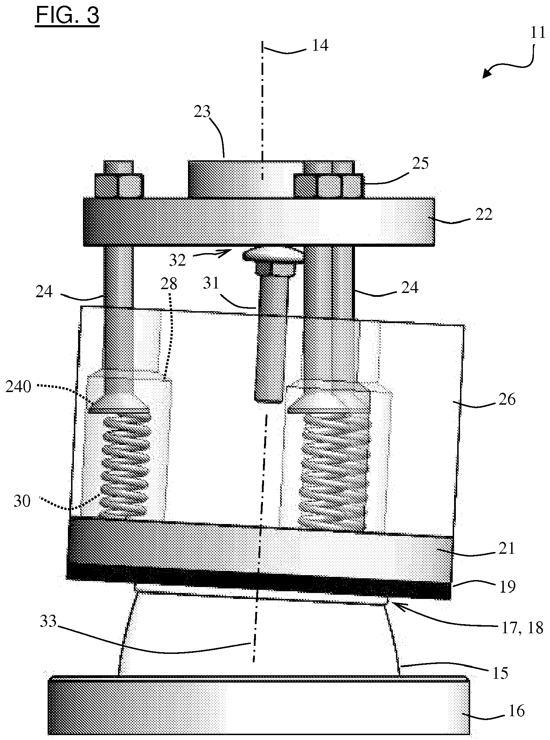

La vis 31 et la portée 32 servent à transmettre à la partie inférieure d'outil, l'effort du vérin transmis à la partie supérieure d'outil, lorsque la portée 32 vient au contact de la face inférieure de la pièce 22 sous l'effet de l'écrasement des ressorts 30, que les parties inférieure et supérieure d'outil soient alignées/coaxiales comme illustré figure 2 notamment, ou non - comme illustré figure 3 notamment -.

Comme il ressort notamment de la comparaison des figures 1 et 2, les tiges 24 dont les têtes sont repoussées vers les butées 28 par les ressorts 30, et les canaux recevant les tiges et permettant leur coulissement et leur rotation/inclinaison - de faible amplitude -, forment ainsi des moyens de suspension et d'articulation de l'ensemble rigide constitué du corps 26, de la pièce 21, et de l'élément conducteur 19, par rapport à la platine 22 et donc par rapport à la tige 12 de l'actionneur 13.

Ces moyens de suspension permettent notamment un mouvement de translation de l'élément conducteur 19 par rapport à l'actionneur linéaire, selon l'axe 14 de déplacement de cet élément par l'actionneur.

Comme il ressort notamment de la comparaison des figures 1 à 3, la capacité d'inclinaison des tiges 24 par rapport aux canaux dans lesquels elles sont engagées, ainsi que la possibilité de compression différentielle des trois ressorts 30 associée à leur faible raideur, permettent l'articulation de l'élément conducteur 19 par rapport à la partie supérieure de l'outil qui est rigidement liée à la tige du vérin : ces moyens permettent une rotation sensiblement libre de cet élément 19 - et des pièces 21 et 26 - selon deux axes de rotation sensiblement orthogonaux, en particulier selon deux axes de rotation qui peuvent être sensiblement perpendiculaires à l'axe 14 de translation du vérin, et/ou à l'axe de l'effort d'appui exercé par l'élément conducteur sur l'opercule et sur le buvant.

Ces moyens d'articulation et de suspension mutuelle des parties inférieure et supérieure d'outil jouent ainsi le rôle d'une rotule dont le centre instantané de rotation se place automatiquement au point de premier contact de l'élément 19 sur l'opercule et le buvant.

Ces moyens d'articulation et de suspension ont l'avantage d'éviter à la partie inférieure de l'outil de transmettre à l'opercule et/ou au buvant, un effort « tangentiel » - ou latéral - au fur et à mesure de la mise en contact de l'élément 19 sur l'opercule, et d'éviter ainsi de provoquer un défaut de positionnement (de centrage) de l'opercule sur le buvant ou un glissement ou un plissement de l'opercule, en cas de défaut de parallélisme.

Ces moyens d'articulation et de suspension permettent une répartition optimale de l'effort d'appui et du flux thermique sur tout le pourtour du buvant, même lorsque celui-ci est initialement incliné par rapport à l'élément 19.

Par ailleurs, après chaque thermoscellage, lorsque la tige 12 est rétractée par le vérin 13, les têtes 240 des tiges 24 reviennent en appui sur les portées coniques 28 des canaux, ce qui provoque le centrage et l'alignement mutuel des parties inférieure et supérieure de l'outil, et les parties inférieure et supérieure d'outil s'écartent mutuellement de sorte que la portée d'appui 32 s'éloigne de la face inférieure de la pièce 22.

## Revendications

1. Dispositif (10) de thermoscellage d'un opercule (18) sur le buvant (17) d'un verre (15), qui comporte un élément (19) déformable et thermiquement conducteur prévu pour appuyer sur l'opercule et sur le buvant et pour chauffer l'opercule et le buvant, dans lequel une partie périphérique (190) de l'élément conducteur (19) est agencée pour s'étendre au-delà du buvant, le dispositif comportant des moyens (24, 240, 26 à 30) d'articulation et de suspension de l'élément conducteur déformable, et des moyens (31, 32) de transmission d'un effort d'appui exercé par un actionneur (13), à l'élément conducteur (19), **caractérisé en ce que** lesdits moyens de transmission d'effort sont distincts des moyens d'articulation et de suspension de l'élément conducteur.

2. Dispositif selon la revendication 1 qui comporte un outil (11) de thermoscellage comportant l'élément conducteur (19), un élément chauffant (20), et une pièce (21) métallique solidaire de l'élément conducteur et de l'élément chauffant, le dispositif comportant en outre un actionneur (13) servant à déplacer l'outil (11) de thermoscellage.

3. Dispositif selon la revendication 2 dans lequel les moyens de suspension de l'élément conducteur déformable comportent au moins un organe de guidage tel qu'une coulisse (24) qui permet un mouvement de translation entre l'élément conducteur (19) et l'actionneur linéaire (13), notamment un mouvement de translation selon l'axe (14) de déplacement de l'outil (11) par l'actionneur.

4. Dispositif selon la revendication 2 ou 3 dans lequel l'outil de thermoscellage comporte une première partie d'outil fixée à une tige (12) de l'actionneur linéaire (13), et une seconde partie d'outil articulée sur - et suspendue à - la première partie d'outil, cette seconde partie d'outil comportant la pièce métallique (21), l'élément chauffant (20), et l'élément conducteur (19).

5. Dispositif selon la revendication 4 dans lequel l'une des première et seconde parties d'outil comporte un corps (26) percé de canaux (27 à 29) parallèles, chaque canal comportant une butée (28) et recevant un ressort (30) s'étendant selon l'axe longitudinal du canal, et l'autre des première et seconde parties d'outil comporte des coulisses (24) parallèles qui sont respectivement partiellement engagées dans les canaux (27 à 29), qui sont en appui sur un ressort (30) respectif, chaque coulisse étant agencée pour coulisser dans un des canaux avec un jeu permettant son inclinaison par rapport à l'axe longitudinal du canal, les butées (28) empêchant la sortie des coulisses hors des canaux (27 à 29).

6. Dispositif selon la revendication 5 dans lequel le nombre de canaux (27 à 29) et le nombre de coulisses (24) sont égaux à trois, les canaux étant, de même que les coulisses, équidistants deux à deux.

7. Dispositif selon l'une quelconque des revendications 1 à 6 dans lequel l'outil de thermoscellage est monté pivotant autour d'un axe horizontal, pour permettre la prise d'un opercule par un préhenseur pneumatique tel qu'une ventouse, qui est intégré à la partie inférieure de la tête de scellage.

8. Dispositif selon l'une quelconque des revendications 1 à 7 dans lequel les moyens d'articulation de l'élément conducteur déformable permettent une rotation de cet élément selon deux axes de rotation sensiblement orthogonaux, en particulier selon deux axes de rotation qui sont sensiblement perpendiculaires à l'axe (14) de déplacement de l'élément conducteur (19), et/ou à l'axe de l'effort d'appui exercé par l'élément conducteur sur l'opercule et sur le buvant.

9. Dispositif selon l'une quelconque des revendications 4 à 8 dans lequel les moyens de transmission d'effort comportent une pièce (31) de transmission d'effort rigidement liée à l'une des première et seconde parties d'outil, en particulier à la seconde partie d'outil et à l'élément conducteur, cette pièce comportant une portée d'appui (32) s'étendant entre les première et seconde parties d'outil, de préférence une portée bombée (32).

10. Procédé de thermoscellage d'un opercule sur le buvant d'un verre dans lequel on utilise un dispositif de thermoscellage selon l'une quelconque des revendications 1 à 9.

11. Procédé selon la revendication 10 dans lequel le verre est en matière plastique, en particulier en polyéthylène-téréphtalate (PET), et dans lequel le buvant du verre présente une nervure, en particulier une nervure en forme de « T » renversé, et dans lequel on provoque une déformation plastique de la nervure lors du scellage de l'opercule.

12. Procédé selon l'une quelconque des revendications 10 ou 11 dans lequel l'appui exercé sur l'opercule et sur le buvant par l'élément conducteur (19) qui s'étend au delà du buvant, provoque un arrondissement - ou une courbure - de la partie externe du buvant.

13. Procédé selon l'une quelconque des revendications 10 à 12 dans lequel le buvant (17) du verre comporte, à la fin du thermoscellage, une section de contour courbe, et dans lequel l'élément conducteur (19) présente une épaisseur, un diamètre, et une élasticité suffisants pour se déformer en épousant la portion périphérique latérale du buvant, pour permettre le thermoscellage de la partie périphérique de l'opercule sur une portion périphérique du buvant, le long de son profil courbe.

14. Procédé selon l'une quelconque des revendications 10 à 13 dans lequel l'élément conducteur (19) exerce un effort d'appui sur l'opercule et sur le buvant, entre la mise en contact de la tête sur le buvant et la fin de la course imprimée par un actionneur à l'élément conducteur, qui est inférieur à celui nécessaire au thermoscellage de l'opercule sur le buvant.

15. Procédé selon l'une quelconque des revendications 10 à 14 dans lequel l'opercule est gaufré et/ou embouti, en partie au moins.

## Patentansprüche

1. Vorrichtung (10) zum Heißsiegeln eines Deckels (18) auf den Trinkrand (17) eines Glases (15), die ein verformbares und wärmeleitendes Teil (19) aufweist, das dafür vorgesehen ist, auf den Deckel und den Trinkrand zu drücken und den Deckel und den Trinkrand zu erwärmen, wobei ein peripherer Bereich (190) des wärmeleitenden Teils (19) dafür ausgebildet ist, sich über den Trinkrand hinaus zu erstrecken, wobei die Vorrichtung Anlenk- und Aufhängemittel (24, 240, 26 bis 30) für das verformbare wärmeleitende Teil aufweist und Übertragungsmittel (31, 32) für eine Andrückkraft, die durch ein Wirkglied (13) auf das wärmeleitende Teil (19) ausgeübt wird, **dadurch gekennzeichnet, dass** die genannten Kraftübertragungsmittel von den Anlenk- und Aufhängemitteln des wärmeleitenden Teils verschieden sind.

2. Vorrichtung nach Patentanspruch 1, die ein Heißsiegelwerkzeug (11) aufweist, das das wärmeleitende Teil (19) umfasst, ein Heizteil (20) und ein Metallteil (21), das mit dem wärmeleitenden Teil und dem Heizteil fest verbunden ist, wobei die Vorrichtung außerdem ein Wirkglied (13) aufweist, das dazu dient, das Heißsiegelwerkzeug (11) zu bewegen.

3. Vorrichtung nach Patentanspruch 2, in der die Aufhängemittel für das verformbare wärmeleitende Teil mindestens ein Führungsorgan umfassen, wie eine Gleitstange (24), die eine Versatzbewegung des wärmeleitenden Teils (19) und des linearen Wirkgliedes (13) relativ zueinander erlaubt, insbesondere eine Versatzbewegung längs einer Achse (14) der Bewegung des Werkzeugs (11) durch das Wirkglied.

4. Vorrichtung nach Patentanspruch 2 oder 3, in der das Heißsiegelwerkzeug einen ersten Werkzeugteil umfasst, der an einer Stange (12) des linearen Wirkgliedes (13) befestigt ist, und einen zweiten, am ersten Werkzeugteil angelenkten - und abgehängten - Werkzeugteil, wobei dieser zweite Werkzeugteil das Metallteil (21), das Heizteil (20) und das wärmeleitende Teil (19) aufweist.

5. Vorrichtung nach Patentanspruch 4, in der entweder der erste oder der zweite Werkzeugteil einen Körper (26) aufweist, der mit parallelen Kanälen (27 bis 29) durchbrochen ist, wobei jeder Kanal einen Anschlag (28) aufweist und eine Feder (30) aufnimmt, die sich längs der Längsachse des Kanals erstreckt, und das andere unter dem ersten und dem zweiten Werkzeugteil parallele Gleitstangen (24) aufweist, die jeweils teilweise in die Kanäle (27 bis 29) eingeführt sind, die an eine zugehörige Feder (30) drücken, wobei jede Gleitstange dafür angeordnet ist, in einem der Kanäle mit einem Spiel zu gleiten, das ihre Neigung relativ zur Längsachse des Kanals erlaubt, wobei die Anschläge (28) das Austreten aus den Kanälen (27 bis 29) verhindern.

6. Vorrichtung nach Patentanspruch 5, in der die Anzahl der Kanäle (27 bis 29) und die Anzahl der Gleitstangen (24) drei beträgt, wobei die Kanäle, wie auch die Gleitstangen paarweise zueinander äquidistant sind.

7. Vorrichtung nach irgendeinem der Patentansprüche 1 bis 6, in der das Heißsiegelwerkzeug um eine horizontale Achse kippend montiert ist, um das Erfassen eines Deckels durch einen pneumatischen Greifer, wie etwa einen Sauger zu erlauben, der in den unteren Teil des Heißsiegelkopfes eingebaut ist.

8. Vorrichtung nach irgendeinem der Patentansprüche 1 bis 7, in der die Anlenkmittel des verformbaren wärmeleitenden Teils eine Drehung dieses Teils um zwei im Wesentlichen zueinander senkrechte Drehachsen erlauben, insbesondere um zwei Drehachsen, die auf der Versatzachse (14) des wärmeleitenden Teils (19) und/oder auf der Achse der vom wärmeleitenden Teil auf den Deckel und den Trinkrand ausgeübten Andrückkraft senkrecht stehen.

9. Vorrichtung nach irgendeinem der Patentansprüche 4 bis 8, in der die Kraftübertragungsmittel ein Kraftübertragungsteil (31) aufweisen, das mit dem ersten oder dem zweiten Werkzeugteil starr verbunden ist, insbesondere mit dem zweiten Werkzeugteil und dem wärmeleitenden Teil, wobei dieses Teil eine Auflagefläche (32) aufweist, die sich zwischen dem ersten und dem zweiten Werkzeugteil erstreckt, vorzugsweise eine gewölbte Auflagefläche (32).

10. Verfahren zum Heißsiegeln eines Deckels auf den Trinkrand eines Glases, in dem eine Heißsiegelvorrichtung nach irgendeinem der Patentansprüche 1 bis 9 verwendet wird.

11. Verfahren nach Patentanspruch 10, in dem das Glas aus Kunststoff besteht, insbesondere aus Polyethylenterephthalat (PET), und in dem der Trinkrand des Glases eine Rippe aufweist, insbesondere eine Rippe in der Form einer umgekehrten "T", und in dem während des Heißsiegelns des Deckels eine plastische Verformung der Rille verursacht wird.

12. Verfahren nach irgendeinem der Patentansprüche 10 oder 11, in dem der durch das wärmeleitende Teil (19), das sich über den Trinkrand hinaus erstreckt, auf den Deckel und den Trinkrand ausgeübte Druck eine Abrundung - oder ein Biegen - des Außenbereichs des Trinkrandes bewirkt.

13. Verfahren nach irgendeinem der Patentansprüche 10 bis 12, in dem der Trinkrand (17) des Glases am Ende des Heißsiegelns einen Querschnitt gebogenen Umrisses aufweist und in dem das wärmeleitende Teil (19) eine Dicke, einen Durchmesser und eine Elastizität aufweist, die dazu ausreichen, sich zu verformen und sich dem seitlichen Peripheriebereich des Trinkrandes anzuschmiegen, um das Heißsiegeln des peripheren Bereichs des Deckels auf einen Peripheriebereich des Trinkrandes längs dessen gebogenem Profil zu ermöglichen.

14. Verfahren nach irgendeinem der Patentansprüche 10 bis 13, in dem das wärmeleitende Teil (19) ab der ersten Berührung des Kopfes mit dem Trinkrand bis zum Ende des durch ein Wirkglied bewirkten Weges des wärmeleitenden Teils eine Andrückkraft auf den Deckel und den Trinkrand ausübt, die geringer ist, als die für das Heißsiegeln des Deckels auf den Trinkrand erforderliche.

15. Verfahren nach irgendeinem der Patentansprüche 10 bis 14, in dem der Deckel mindestens teilweise geprägt und/oder getieft ist.

## Claims

1. A device (10) for heat sealing a film lid (18) on the rim (17) of a glass (15), the device including a deformable and thermally conductive element (19) designed to press against the film lid and the rim in order to heat the film lid and the rim, wherein a peripheral portion (190) of the conductive element (19) is arranged to extend beyond the rim, the device including means (24, 240, 26 to 30) for hinging and suspending the deformable conductive element and means (31, 32) for transmitting a pressure force exerted by an actuator (13) to the conductive element (19), the device being **characterized in that** said force transmission means are distinct from the means for hinging and suspending the conductive element.

2. A device according to claim 1 including a heat-sealing tool (11) having the conductive element (19), a heater element (20), and a metal part (21) secured to the conductive element and to the heater element, the device further including an actuator (13) for moving the heat-sealing tool (11).

3. A device according to claim 2, wherein the means for suspending the deformable conductive element comprise at least one guide member such as a slide (24) that enables the conductive element (19) and the linear actuator (13) to move in translation relative to each other, and in particular enables them to move in translation along the axis (14) along which the tool (11) is caused to move by the actuator.

4. A device according to claim 2 or claim 3, wherein the heat-sealing tool includes a first tool portion fastened to a rod (12) of the linear actuator (13), and a second tool portion hinged to and suspended from the first tool portion, the second tool portion including the metal part (21), the heater element (20), and the conductive element (19) .

5. A device according to claim 4, wherein one of the first and second tool portions has a body (26) pierced by parallel channels (2'/ to 29), each channel including an abutment (28) and receiving a spring (30) extending along the longitudinal axis of the channel, and the other one of the first and second tool portions includes parallel slides (24) that are partially engaged in respective ones of the channels (27 to 29), and that press against respective springs (30), each slide being arranged to slide in one of the channels with clearance allowing it to tilt relative to the longitudinal axis of the channel, the abutments (28) preventing the slide escaping from the channels (27 to 29).

6. A device according to claim 5, wherein the number of channels (27 to 29) and the number of slides (24) are equal to three, the channels and the slides being equidistant in pairs.

7. A device according to any one of claims 1 to 6, wherein the heat-sealing tool is mounted to pivot about a horizontal axis in order to enable a film lid to be gripped by a pneumatic gripper such as a suction cup that is incorporated in the bottom portion of the sealing head.

8. A device according to any one of claims 1 to 7, wherein the means for hinging the deformable conductive element enable this element to pivot about two substantially orthogonal pivot axes, in particular about two pivot axes that are substantially perpendicular to the travel axis (14) of the conductive element (19), and/or to the axis of the pressure force exerted by the conductive element on the film lid and on the rim.

9. A device according to any one of claims 4 to 8, wherein the force transmission means comprise a force transmission part (31) rigidly connected to one of the first and second tool portions, in particular to the second tool portion and to the conductive element, this part including a bearing surface (32) extending between the first and second tool portions, preferably a bearing surface (32) that is domed.

10. A method of heat sealing a film lid on the rim of a glass in which use is made of a heat-sealing device according to any one of claims 1 to 9.

11. A method according to claim 10, wherein the glass is made of plastics material, in particular out of polyethylene terephthalate (PET), and wherein the rim of the glass presents a rib, in particular a rib of upside-down T-shape, and wherein the rib is deformed plastically during heat sealing of the film lid.

12. A method according to any one of claims 10 or 11, wherein the pressure exerted on the film lid and on the rim by the conductive clement (19) that extends beyond the rim leads to rounding, or curving, of the outside portion of the rim.

13. A method according to any one of claims 10 to 12, wherein the rim (17) of the glass, at the end of heat sealing, has a section of curved outline, and wherein the conductive element (19) presents thickness, diameter, and elasticity that are sufficient to deform so as to fit closely to the lateral peripheral portion of the rim in order to enable the peripheral portion of the film lid to be heat sealed to a peripheral portion of the rim along its curved profile.

14. A method according to any one of claims 10 to 13, wherein the conductive element (19) exerts a pressure force on the film lid and on the rim between the head coming into contact with the rim and the end of the stroke imparted by an actuator to the conductive element, which force is less than that needed for heat sealing the film lid on the rim.

15. A method according to any one of claims 10 to 14, wherein the film lid is indented and/or stamped, at least in part.
